(19) Europäisches Patentamt
European Patent Office
Office européen des brevets

(11) EP 3 033 393 B1

(12) # EUROPEAN PATENT SPECIFICATION

(45) Date of publication and mention of the grant of the patent:
**15.08.2018 Bulletin 2018/33**

(21) Application number: **14789609.6**

(22) Date of filing: **15.08.2014**

(51) Int Cl.:
***C08L 69/00*** *(2006.01)*

(86) International application number:
**PCT/IB2014/063938**

(87) International publication number:
**WO 2015/022676 (19.02.2015 Gazette 2015/07)**

(54) **HIGH MODULUS AND ULTRA-HIGH DUCTILITY BLENDED THERMOPLASTIC COMPOSITIONS**

GEMISCHTE THERMOPLASTISCHE ZUSAMMENSETZUNGEN MIT HOHEM MODULUS UND ULTRAHOHER DUKTILITÄT

COMPOSITIONS THERMOPLASTIQUES MÉLANGÉES À MODULE ÉLEVÉ ET DUCTILITÉ ULTRA-HAUTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2013 US 201361866819 P**

(43) Date of publication of application:
**22.06.2016 Bulletin 2016/25**

(73) Proprietor: **SABIC Global Technologies B.V.**
**4612 PX Bergen op Zoom (NL)**

(72) Inventors:
- **LI, Ying**
  **Shanghai 201203 (CN)**
- **SUN, Pei**
  **Shanghai 201203 (CN)**
- **CHANG, Baisong**
  **Shanghai 201203 (CN)**
- **SHEN, Dake**
  **Shanghai 201203 (CN)**

(74) Representative: **Modiano, Micaela Nadia et al**
**Modiano & Partners**
**Thierschstrasse 11**
**80538 München (DE)**

(56) References cited:
**WO-A1-2010/077644**
**US-A1- 2009 088 514**
**US-A1- 2011 028 615**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to blended thermoplastic compositions comprising at least one polycarbonate component, at least one impact modifier, at least one mineral filler, and at least one flame retardant. The resulting compositions can be used in the manufacture of articles requiring materials with high modulus, ultra-high ductility, good flow, thin wall flame retardancy and good thermal resistance.

BACKGROUND

The development of improved blended thermoplastic compositions, e.g. reinforced polycarbonate compositions, with robust flame-retardant properties presents significant technical challenges in discovering compositions that maintain the appropriate balance of modulus, ductility, flow, thin wall flame retardancy and heat resistance. For example, the modulus can be improved with the addition of inorganic fillers, however, the impact toughness will significantly drop compared to unfilled compositions. The use of blended thermoplastic compositions in the application of electrical and electronic fields, especially the consumer electronics industry, increasingly requires compositions able to meet the stringent requirements pertaining to modulus, flow, appearance, flame retardance, and heat resistance as these compositions are being utilized in applications with thin wall design. In particular, the industry has a strong need for compositions capable of high modulus and ultra-high ductility, i.e. impact toughness and tensile elongation similar to the levels obtained with unfilled polycarbonate compositions, together with good processability and thin wall flame retardancy.

Thus, there remains a need for compositions that better manage the appropriate balance of stiffness and ductility while retaining a balanced profile of other properties. Accordingly, it would be beneficial to blended thermoplastic resin compositions that have high modulus and ultra-high ductility while retaining appropriate balance of other properties such good processability and thin wall flame retardancy.

US 2011/0028615 discloses a composition containing a polycarbonate, a polycarbonate-polysiloxane copolymer, an alicyclic hydrocarbon resin flow promoter, an inorganic filler, a flame retardant and an impact modifier. The compositions may include polycarbonate in an amount of 40% by weight or more of the combined weights of the polycarbonate, polycarbonate-polysiloxane copolymer, inorganic filler, flame retardant, flow promoter, and impact modifier compound wherein a molded sample of the thermoplastic composition is capable of achieving UL94 V0 rating at a thickness of 1.2 mm (±10%); wherein the polymer composition has a melt viscosity of 185 Pa·sec or less, when measured at 270° C. and 1500 sec-1; and wherein a molded sample of the thermoplastic composition has a flexural modulus determined in accordance with ASTM D790 within 3800-8000 MPa; and wherein a 3.2-mm thick molded NII bar comprising the composition has a notched Izod impact strength of 40 to 200 J/m determined in accordance with ASTM D256 at 23° C.

SUMMARY

In one aspect, the present invention provides a blended thermoplastic composition comprises: (a) from 60 wt% to 80 wt% of a polycarbonate component; (b) from greater than 0 wt% to 5 wt% of an impact modifier component; (c) from greater than 0 wt% to 25 wt% of a mineral filler component; and (d) from 5 wt% to 15 wt% of a flame retardant component; wherein the combined weight percent value of all components does not exceed 100 wt%; and wherein all weight percent values are based on the total weight of
the composition, wherein the polycarbonate component comprises 5-15 wt % polycarbonate-polysiloxane copolymer based on total weight of the composition, and the flame retardant component comprises a first flame retardant and a second flame retardant, wherein the first flame retardant is selected from rescorcinol bis(diphenyl phosphate), resorcinol bis(dixylenylphosphate), hydroquinone bis(diphenyl phosphate), bisphenol-A bis(diphenyl phosphate), 4,4'-biphenol bis(diphenyl phosphate), triphenyl phosphate, methylneopentyl phosphite, pentaerythritol diethyl diphosphite, methyl neopentyl phosphonate, phenyl neopentyl phosphate, pentaerythritol diphenyldiphosphate, dicyclopentyl hypodiphosphate, dineopentyl hypophosphite, phenylpyrocatechol phosphite, ethylpyrocatechol phosphate and dipyrocatechol hypodiphosphate and the second flame retardant is aromatic cyclic phosphazene compounds having a structure represented by the formula:

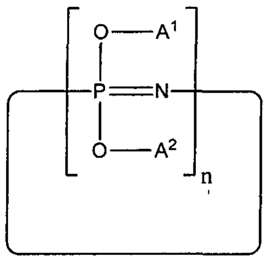

wherein each of A1 and A2 is independently an aryl group having 6 to 10 carbon atoms optionally substituted with 1 to 4 alkyl groups having 1 to 4 carbon atoms; and wherein n is an integer of 3 to 6,

While aspects of the present invention can be described and claimed in a particular statutory class, such as the system statutory class, this is for convenience only and one of skill in the art will understand that each aspect of the present invention can be described and claimed in any statutory class. Additional aspects of the invention will be set forth in part in the description which follows, and in part will be obvious from the description, or can be learned by practice of the invention. The advantages of the invention will be realized and attained by means of the elements and combinations particularly pointed out in the appended claims. It is to be understood that both the foregoing general description and the following detailed description are exemplary and explanatory only and are not restrictive of the invention, as claimed.

## DETAILED DESCRIPTION

The composition of the present invention can be used in the manufacture of articles requiring materials with high modulus, ultra-high ductility, good flow, thin wall flame retardancy and good thermal resistance.

The present invention can be understood more readily by reference to the following detailed description of the invention and the Examples included therein.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Although any methods and materials similar or equivalent to those described herein can be used in the practice or testing of the present invention, example methods and materials are now described.

The terms "polycarbonate" or "polycarbonates" as used herein includes copolycarbonates, homopolycarbonates and (co)polyester carbonates.

The term polycarbonate can be further defined as compositions have repeating structural units of the formula (1):

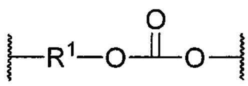 (1),

in which at least 60 percent of the total number of $R^1$ groups are aromatic organic radicals and the balance thereof are aliphatic, alicyclic, or aromatic radicals. In a further aspect, each $R^1$ is an aromatic organic radical and, more preferably, a radical of the formula (2):

$$-A^1-Y^1-A^2- \qquad (2),$$

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$. For example, radicals of this type include, but are not limited to, radicals such as -O-, -S-, -S(O)-, $-S(O_2)-$, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such as methylene, cyclohexylidene, or isopropylidene. Polycarbonate materials include materials disclosed and described in U.S. Patent No. 7,786,246, which discloses various polycarbonate compositions and methods for manufacture of same. Polycarbonate polymers can be manufactured by means known to those skilled in the art.

Some compositions comprise two or more polycarbonate polymers. In some embodiments, the blended thermoplastic polymer comprises from about 20 weight percent (wt%) to about 40 wt% of a first polycarbonate component. In some embodiments, the first polycarbonate polymer has a melt flow rate (MFR) from about 20 grams/10 minutes to

about 30 grams/10 minutes when measured at 300 °C and under a load of 1.2 kilograms (kg) according to ASTM D1238. In certain embodiments, the first polycarbonate polymer has a weight average molecular weight from about 18,000 to about 25,000 grams/mole, as measured by gel permeation chromatography using BPA polycarbonate standards.

For certain compositions having two or more polycarbonate polymers, the second polycarbonate polymer is present in an amount of from about 20 wt% to about 40 wt% of a second polycarbonate component. Some preferred second polycarbonate polymers have a melt flow rate (MFR) from about 4.0 grams/10 minutes to about 10.0 grams/10 minutes when measured at 300 °C and under a load of 1.2 kg according to ASTM D1238. Some second polycarbonate polymer components have a weight average molecular weight from about 25,000 to about 30,000 grams/mole, as measured by gel permeation chromatography using BPA polycarbonate standards.

Some compositions also contain a polycarbonate-polysiloxane copolymer. In certain embodiments, this copolymer is a third polymer in the blended thermoplastic composition. In some embodiments, the polycarbonate-polysiloxane copolymer is present in an amount of 5 wt% to about 15 wt% of the blended thermoplastic composition.

As used herein, the term "polycarbonate-polysiloxane copolymer" is equivalent to polysiloxane-polycarbonate copolymer, polycarbonate-polysiloxane polymer, or polysiloxane-polycarbonate polymer. In various aspects, the polycarbonate-polysiloxane copolymer can be a block copolymer comprising one or more polycarbonate blocks and one or more polysiloxane blocks. The polysiloxane-polycarbonate copolymer comprises polydiorganosiloxane blocks comprising structural units of the general formula (13) below:

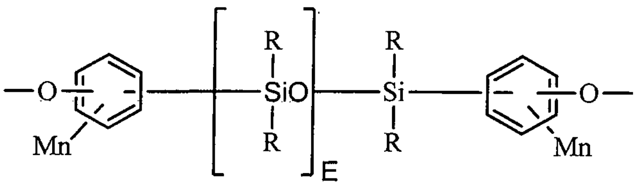

(13)

wherein the polydiorganosiloxane block length (E) is from about 20 to about 60; wherein each R group can be the same or different, and is selected from a $C_{1-13}$ monovalent organic group; wherein each M can be the same or different, and is selected from a halogen, cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ aralkyl, $C_7$-$C_{12}$ aralkoxy, $C_7$-$C_{12}$ alkylaryl, or $C_7$-$C_{12}$ alkylaryloxy, and where each n is independently 0, 1, 2, 3, or 4. The polysiloxane-polycarbonate copolymer also comprises polycarbonate blocks comprising structural units of the general formula (14) below:

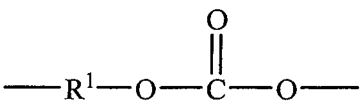

(14)

wherein at least 60 percent of the total number of $R^1$ groups comprise aromatic moieties and the balance thereof comprise aliphatic, alicyclic, or aromatic moieties. Polysiloxane-polycarbonates materials include materials disclosed and described in U.S. Patent No. 7,786,246, which discloses various compositions and methods for manufacture of same.

In some embodiments, the blended thermoplastic composition has a melt flow rate (MFR) of greater than or equal to about 10 grams/10 minutes when tested in accordance with ASTM D1238 at 260 °C under a load of 2.16 kg. Certain embodiments are such that a molded sample comprising the blended thermoplastic composition has a notched Izod impact strength greater than or equal to about 500 Joules/meter (J/m) when tested in accordance with ASTM D256. Some molded samples comprising the blended thermoplastic compositions have a heat deflection temperature (HDT) greater than or equal to about 90 °C when tested in accordance with ASTM D648 on a 3.2 millimeter (mm) thickness bar at 1.82 MegaPascals (MPa). In certain preferred compositions, a molded sample comprising the blended thermoplastic composition has a probability of a first time pass (pFTP) value greater than or equal to about 0.85.

Some blended thermoplastic composition comprise from about 60 wt% to about 80 wt% of a polycarbonate component; from about 1 wt% to about 5 wt% of an impact modifier component; from about 5 wt% to about 25 wt% of a mineral filler component; and from about 5 wt% to about 12 wt% of a flame retardant component. Other blended thermoplastic compositions comprise from about 60 wt% to about 80 wt% of a polycarbonate component; from about 1 wt% to about 4 wt% of an impact modifier component; from about 10 wt% to about 20 wt% of a mineral filler component; and from about 5 wt% to about 10 wt% of a flame retardant component. Yet other blended thermoplastic composition comprise from about 60 wt% to about 80 wt% of a polycarbonate component; from about 1 wt% to about 3 wt% of an impact modifier component; from about 12.5 wt% to about 17.5 wt% of a mineral filler component; and from about 6 wt% to about 9 wt% of a flame retardant component. Still other blended thermoplastic compositions comprise from about

20 wt% to about 40 wt% of a first polycarbonate component; wherein the first polycarbonate polymer component has a melt flow rate (MFR) from about 20 grams/10 minutes to about 30 grams/10 minutes when measured at 300 °C and under a load of 1.2 kg according to ASTM D1238; and wherein the first polycarbonate polymer component has a weight average molecular weight from about 18,000 to about 25,000 grams/mole, as measured by gel permeation chromatography using BPA polycarbonate standards; from about 20 wt% to about 40 wt% of a second polycarbonate component; wherein the second polycarbonate polymer component has a melt flow rate (MFR) from about 4.0 grams/10 minutes to about 10.0 grams/10 minutes when measured at 300 °C and under a load of 1.2 kg according to ASTM D1238; and wherein the second polycarbonate polymer component has a weight average molecular weight from about 25,000 to about 30,000 grams/mole, as measured by gel permeation chromatography using BPA polycarbonate standards; from about 5 wt% to about 15 wt% of a third polycarbonate component; wherein the third polycarbonate component is a polycarbonate-polysiloxane copolymer; wherein the third polycarbonate component comprises a polysiloxane block from about 15 wt% to about 30 wt% of the polycarbonate-polysiloxane copolymer; from greater than about 0 wt% to about 5 wt% of an impact modifier component; from greater than about 0 wt% to about 25 wt% of a mineral filler component; and from about 5 wt% to about 15 wt% of a flame retardant component.

Other blended thermoplastic composition comprise (a) from about 20 wt% to about 40 wt% of a first polycarbonate component; wherein the first polycarbonate polymer component has a melt flow rate (MFR) from about 20 grams/10 minutes to about 30 grams/10 minutes when measured at 300 °C and under a load of 1.2 kg according to ASTM D1238; and wherein the first polycarbonate polymer component has a weight average molecular weight from about 18,000 to about 25,000 grams/mole, as measured by gel permeation chromatography using BPA polycarbonate standards; (b) from about 20 wt% to about 40 wt% of a second polycarbonate component; wherein the second polycarbonate polymer component has a melt flow rate (MFR) from about 4.0 grams/10 minutes to about 10.0 grams/10 minutes when measured at 300 °C and under a load of 1.2 kg according to ASTM D1238; and wherein the second polycarbonate polymer component has a weight average molecular weight from about 25,000 to about 30,000 grams/mole, as measured by gel permeation chromatography using BPA polycarbonate standards; (c) from about 5 wt% to about 15 wt% of a third polycarbonate component; wherein the third polycarbonate component is a polycarbonate-polysiloxane copolymer; wherein the third polycarbonate component comprises a polysiloxane block from about 15 wt% to about 30 wt% of the polycarbonate-polysiloxane copolymer; (d) from greater than about 0 wt% to about 5 wt% of an impact modifier component; (e) from greater than about 0 wt% to about 25 wt% of a mineral filler component; and (f) from about 5 wt% to about 15 wt% of a flame retardant component; wherein the combined weight percent value of all components does not exceed about 100 wt%; wherein all weight percent values are based on the total weight of the composition; wherein the blended thermoplastic composition has a melt flow rate (MFR) of greater than or equal to about 10 g/10 min when tested in accordance with ASTM D1238 at 260 °C under a load of 2.16 kg; wherein a molded sample comprising the blended thermoplastic composition has a notched Izod impact strength greater than or equal to about 500 J/m when tested in accordance with ASTM D256; wherein a molded sample comprising the blended thermoplastic composition has a heat deflection temperature (HDT) greater than or equal to about 90 °C when tested in accordance with ASTM D648 on a 3.2 mm thickness bar at 1.82 MPa; and wherein a molded sample comprising the blended thermoplastic composition has a pFTP value greater than or equal to about 0.85. In each of the preceding blended thermoplastic compositions, the combined weight percent value of all components does not exceed about 100 wt%; and wherein all weight percent values are based on the total weight of the composition.

Additional components can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, chain extender, colorant (e.g., a dye or pigment), de-molding agents, flow promoter, flow modifier, surface effect additive, radiation stabilizer, flame retardant, anti-drip agent (e.g., a PTFE-encapsulated styrene-acrylonitrile copolymer (TSAN)), or a combination comprising one or more of the foregoing.

In some embodiments, additives such as fillers, flame retardants, and surface enhancers can be added to the compositions disclosed herein. Exemplary fillers and flame retardants are discussed in U.S. Patent No. 7,786,246, which discloses various compositions.

Certain fillers are discussed in U.S. Patent Publication No. 2014/0107266. Filler components include glass beads, glass fiber, glass flakes, mica, talc, clay, wollastonite, zinc sulfide, zinc oxide, carbon fiber (including standard carbon fiber, a performance carbon fiber, or a long carbon fiber), ceramic-coated graphite, titanium dioxide, or combinations thereof. Some compositions comprise a mineral filler. In some embodiments, the mineral filler component is selected from a fibrous filler, a platy filler, or combinations thereof. Preferred mineral fillers include talc, wollastonite, or combinations thereof. In some compositions, the mineral filler component is present in an amount from about 0 wt% to about 25 wt% of the blended composition. In other embodiments, the mineral filler is present in an amount of about 10 wt% to about 20 wt% of the blended composition.

Flame retardants include phosphorus-containing flame retardants. Examples include phosphazene, aryl phosphate, bisphenol A disphosphate, resorcinol bis-diphenylphosphate, bisphenol A diphenyl phosphate, or resorcinol diphosphate, or a combination thereof. Certain flame retardants are discussed in U.S. Patent Publication No. 2014/0107266.

In the composition of the present invention, the phosphorus-containing flame retardant comprises a first flame retardant and a second flame retardant. Options for the first flame retardant include rescorcinol bis(diphenyl phosphate), resorcinol bis(dixylenyl phosphate), hydroquinone bis(diphenyl phosphate), bisphenol-A bis(diphenyl phosphate), 4,4'-biphenol bis(diphenyl phosphate), triphenyl phosphate, methylneopentyl phosphite, pentaerythritol diethyl diphosphite, methyl neopentyl phosphonate, phenyl neopentyl phosphate, pentaerythritol diphenyldiphosphate, dicyclopentyl hypodiphosphate, dineopentyl hypophosphite, phenylpyrocatechol phosphite, ethylpyrocatechol phosphate and dipyrocatechol hypodiphosphate. Options for the second flame retardant include aromatic cyclic phosphazene compounds having a structure represented by the formula:

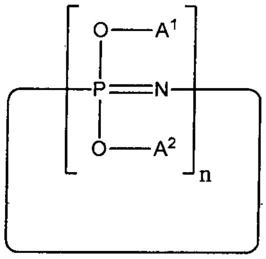
,

wherein each of A1 and A2 is independently an aryl group having 6 to 10 carbon atoms optionally substituted with 1 to 4 alkyl groups having 1 to 4 carbon atoms; and wherein n is an integer of 3 to 6. In certain embodiments, the first flame retardant is present in an amount from about 1 wt% to about 4 wt% of the blended composition and the second flame retardant is present in an amount from about 4 wt% to about 8 wt% of the blended composition.

Impact modifiers include acrylonitrile-butadiene-styrene (ABS) polymer component, methyl methacrylate-butadiene-styrene (MBS) polymer component, bulk polymerized ABS (BABS) polymer, polyolefin elastomer (POE) polymer component, and silicone rubber impact modifier (SAIM) polymer component, and combinations thereof. Certain impact modifiers are discussed in U.S. Patent Publication No. 2014/0179817.

Some blended compositions have an antioxidant. Some antioxidants are primary antioxidants such as hindered phenols and secondary aryl amines. Some antioxidants are secondary anti-oxidants such as organophosphate, thioesters, or combinations thereof. Blended composition can have either primary, secondary or a mixture of primary and secondary antioxidants. In some embodiments, the primary anti-oxidant is present in an amount from about 0.01 wt% to about 0.50 wt% based on the weight of the blended composition. In certain embodiments, the secondary antioxidant is present in an amount from about 0.01 wt% to about 0.50 wt% of the blended composition.

In one aspect, the present invention pertains to shaped, formed, or molded articles comprising the blended thermoplastic compositions. The blended thermoplastic compositions can be molded into useful shaped articles by a variety of means such as injection molding, extrusion, rotational molding, blow molding and thermoforming to form articles. The blended thermoplastic compositions described herein can also be made into film and sheet as well as components of laminate systems. In a further aspect, a method of manufacturing an article comprises melt blending the polycarbonate component, the impact modifier component, the flame retardant component, and the mineral filler component; and molding the extruded composition into an article. In a still further aspect, the extruding is done with a twin-screw extruder. In a further aspect, the article is extrusion molded. In a still further aspect, the article is injection molded.

Formed articles include, for example, personal computers, notebook and portable computers, cell phone antennas and other such communications equipment, medical applications, RFID applications, automotive applications, and the like. In various further aspects, the article is a computer and business machine housing such as a housing for high end laptop personal computers, monitors, a hand held electronic device housing such as a housing for smart phones, tablets, music devices electrical connectors, and components of lighting fixtures, ornaments, home appliances, and the like.

In a further aspect, the present invention pertains to electrical or electronic devices comprising the disclosed blended polycarbonate compositions. In a further aspect, the electrical or electronic device comprising the disclosed blended polycarbonate compositions is a cellphone, a MP3 player, a computer, a laptop, a camera, a video recorder, an electronic tablet, a pager, a hand receiver, a video game, a calculator, a wireless car entry device, an automotive part, a filter housing, a luggage cart, an office chair, a kitchen appliance, an electrical housing, an electrical connector, a lighting fixture, a light emitting diode, an electrical part, or a telecommunications part.

In various aspects, the polymer composition can be used in the field of electronics. In a further aspect, non-limiting examples of fields which can use the disclosed blended thermoplastic polymer compositions include electrical,

electro-mechanical, radio frequency (RF) technology, telecommunication, automotive, aviation, medical, sensor, military, and security. In a still further aspect, the use of the disclosed blended thermoplastic polymer compositions can also be present in overlapping fields, for example in mechatronic systems that integrate mechanical and electrical properties which may, for example, be used in automotive or medical engineering.

In a further aspect, the article is an electronic device, automotive device, telecommunication device, medical device, security device, or mechatronic device. In a still further aspect, the article is selected from a computer device, electromagnetic interference device, printed circuit, Wi-Fi device, Bluetooth device, GPS device, cellular antenna device, smart phone device, automotive device, medical device, sensor device, security device, shielding device, RF antenna device, LED device, and RFID device. In yet a further aspect, the article is selected from a computer device, sensor device, security device, RF antenna device, LED device and RFID device. In an even further aspect, the article is selected from a computer device, RF antenna device, LED device and RFID device. In a still further aspect, the article is selected from a RF antenna device, LED device and RFID device. In yet a further aspect, the article is selected from a RF antenna device and RFID device. In an even further aspect, the article is a LED device. In a still further aspect, the LED device is selected from a LED tube, a LED socket, and a LED heat sink.

In various aspects, molded articles according to the present invention can be used to produce a device in one or more of the foregoing fields. In a still further aspect, non-limiting examples of such devices in these fields which can use the disclosed blended thermoplastic polymer compositions according to the present invention include computer devices, household appliances, decoration devices, electromagnetic interference devices, printed circuits, Wi-Fi devices, Bluetooth devices, GPS devices, cellular antenna devices, smart phone devices, automotive devices, military devices, aerospace devices, medical devices, such as hearing aids, sensor devices, security devices, shielding devices, RF antenna devices, or RFID devices.

In a further aspect, the molded articles can be used to manufacture devices in the automotive field. In a still further aspect, non-limiting examples of such devices in the automotive field which can use the disclosed blended thermoplastic compositions in the vehicle’s interior include adaptive cruise control, headlight sensors, windshield wiper sensors, and door/window switches. In a further aspect, non-limiting examples of devices in the automotive field which can the disclosed blended thermoplastic compositions in the vehicle’s exterior include pressure and flow sensors for engine management, air conditioning, crash detection, and exterior lighting fixtures.

In a further aspect, the resulting disclosed compositions can be used to provide any desired shaped, formed, or molded articles. For example, the disclosed compositions can be molded into useful shaped articles by a variety of means such as injection molding, extrusion, rotational molding, blow molding and thermoforming. As noted above, the disclosed compositions are particularly well suited for use in the manufacture of electronic components and devices. As such, according to some aspects, the disclosed compositions can be used to form articles such as printed circuit board carriers, burn in test sockets, flex brackets for hard disk drives, and the like.

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this invention belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate poly" includes mixtures of two or more polycarbonate polymers. As used herein, the term "combination" is inclusive of blends, mixtures, alloys, reaction products, and the like.

Ranges can be expressed herein as from one particular value, and/or to another particular value. When such a range is expressed, another aspect includes from the one particular value and/or to the other particular value. Similarly, when values are expressed as approximations, by use of the antecedent ’about,’ it will be understood that the particular value forms another aspect. It will be further understood that the endpoints of each of the ranges are significant both in relation to the other endpoint, and independently of the other endpoint. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the value designated some other value approximately or about the same. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless

specifically stated otherwise.

As used herein, the terms "optional" or "optionally" means that the subsequently described event or circumstance can or cannot occur, and that the description includes instances where said event or circumstance occurs and instances where it does not. For example, the phrase "optionally substituted alkyl" means that the alkyl group can or cannot be substituted and that the description includes both substituted and unsubstituted alkyl groups.

As used herein, the term "effective amount" refers to an amount that is sufficient to achieve the desired modification of a physical property of the composition or material. For example, an "effective amount" of a mineral filler refers to an amount that is sufficient to achieve the desired improvement in the property modulated by the formulation component, e.g. achieving the desired level of modulus. The specific level in terms of wt% in a composition required as an effective amount will depend upon a variety of factors including the amount and type of polycarbonate, amount and type of thermally conductive filler, and end use of the article made using the composition.

Disclosed are the components to be used to prepare the compositions of the invention as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the invention. Thus, if there are a variety of additional steps that can be performed it is understood that each of these additional steps can be performed with any specific aspect or combination of aspects of the methods of the invention.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where Mi is the molecular weight of a chain and Ni is the number of chains of that molecular weight. Mn can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i M_i^{\,2}}{\sum N_i M_i},$$

where Mi is the molecular weight of a chain and Ni is the number of chains of that molecular weight. Compared to Mn, Mw takes into account the molecular weight of a given chain in determining contributions to the molecular weight average. Thus, the greater the molecular weight of a given chain, the more the chain contributes to the Mw. Mw can be determined for polymers, e.g. polycarbonate polymers, by methods well known to a person having ordinary skill in the art using molecular weight standards, e.g. polycarbonate standards or polystyrene standards, preferably certified or traceable

molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

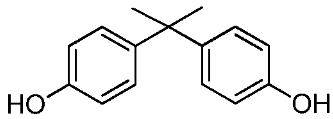

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates. The terms "residues" and "structural units", used in reference to the constituents of the polymers, are synonymous throughout the specification.

Certain abbreviations are defined as follows: "g" is grams, "kg" is kilograms, "°C" is degrees Celsius, "min" is minutes, "mm" is millimeter, "mPa" is megapascal, "WiFi" is a system of accessing the internet from remote machines, "GPS" is Global Positioning System-- a global system of U.S. navigational satellites which provide positional and velocity data. "LED" is light-emitting diode, "RF" is radio frequency, and "RFID" is radio frequency identification.

Unless otherwise stated to the contrary herein, all test standards are the most recent standard in effect at the time of filing this application. Each of the materials disclosed herein are either commercially available and/or the methods for the production thereof are known to those of skill in the art. It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions. The materials shown in Table 1 were used to prepare the compositions described in Tables 2, 4, 6, and 8 and evaluated herein.

Table 1.

| Component | Chemical description | Source |
|---|---|---|
| PC1 | BPA polycarbonate resin made by a melt process with an MFR at 300 °C/1.2 kg, of about 23.5 to about 28.5 g/10 min. | SABIC Innovative Plastics ("SABIC I.P.") |

(continued)

| Component | Chemical description | Source |
|---|---|---|
| PC2 | BPA polycarbonate resin made by an interfacial process with MFR at 300 °C/ 1.2 kg, of about 5.1 to about 6.9 g/10 min. In some embodiments, a portion of the PC2 component comprises PC-PS 1. | SABIC I.P. |
| PC-PS1 | BPA polycarbonate-polydimethylsiloxane block copolymer comprising about 20 wt% of siloxane and about 80 wt% by of BPA; PCP end-capped; with a polydiorganosiloxane chain length of about 45 (D45) and having a Mw of about 29,900 Daltons. | SABIC I.P. |
| ABS | Acrylic impact modifier that is an emulsion copolymer of methacrylate butyl acrylate with a core-shell structure; commercially available under the trade name HR181. | Kumho |
| MBS | Methyl methacrylate-butadiene-styrene polymer impact modifier; commercially available under the trade name EXL 2650A | Dow Chemical |
| POE | Polyolefin elastomer; commercially available under the trade name Engage 8401. | Dow Chemical |
| SRIM | Silicone rubber impact modifier; commercially available under the trade name Metablen S-2001. | Mitsubishi |
| TALC | Surface-modified talc (magnesium silicate hydrate) with a mean particle size of 1.8 microns. Sold under the trade name Luzenac® R7 | Imerys |
| WOLL | Wollastonite with median fiber diameter of about 4.5 $\mu$m and length of about 50 $\mu$m; commercially available under the trade name Nyglos® 4W 10992. | Nyco Minerals, Inc. |
| MICA | Phlogopite mica with median particle size of about 150 $\mu$m; commercially available under the trade name Suzorite® 150-S. | Imerys |
| FR1 | Aromatic cyclic phosphazene-containing flame retardant with chemical formula $(C_{12}H_{10}NPO_2)_n$, wherein n is from about 3 to about 6; commercially available under the trade name Rabitle FP-110. | Fushimi Pharmaceutical Co., Ltd. |
| FR2 | Bisphenol A bis(diphenyl phosphate), CAS Reg. No. 181028-79-5; commercially available under the trade name CR741. | Daihachi Chemical Industry Co., Ltd. |
| TSAN | PTFE encapsulated in SAN (50 wt.% PTFE, 50 wt.% SAN). | SABIC I.P. |
| AO1 | Tris (2,4-di-tert-butylphenyl) phosphite; available under the trade name Irgaphos™ I-168. | Great Lakes Chemical Corp. |
| AO2 | Sterically hindered phenol antioxidant, octadecyl-3-(3,5-di-tert.butyl-4-hydroxyphenyl)-propionate (CAS# 2082-79-3); available under the trade name Irganox® 1076. | Ciba Specialty Chemicals, Ltd. |
| PETS | Pentaerythritol tetrastearate | Faci Asia Pacific Pte. Ltd. |

All samples were prepared by melt extrusion on a Toshiba Twin screw extruder, using a nominal melt temperature of 265 °C and operated at 400 revolutions per minute (rpm). Melt Flow Rate ("MFR") was determined at 260 °C under a 2.16 kg load, over 10 minutes, in accordance with ASTM D1238. Each reported value is an average value of three tested specimens. Results are reported in grams per 10 minutes. Notched Izod Impact Strength ("NII") was used to compare the impact resistances of plastic materials and was determined in accordance with ASTM D256 at the indicated temperatures with a 5.5 Joule hammer using 3.2 mm thick notched Izod bars The ASTM results are defined as the impact energy in Joules used to break the test specimen, divided by the specimen area at the notch. Results are reported in J/m.

Tensile testing was carried out at 5 mm/min in accordance with ASTM D638. Flexural testing was carried out at 1.27 mm/min in accordance with ASTM D790. Heat deflection temperature ("HDT") was determined at 1.82 MPa on a sample with 3.2 mm thickness in accordance with ASTM D 648.

Flammability tests were performed following the procedure of Underwriter's Laboratory Bulletin 94 entitled

"Tests for Flammability of Plastic Materials, UL94". According to this procedure, the materials were classified as either UL94 V0, UL94 V1, or UL94 V2 on the basis of the test results obtained for five samples. The procedure and criteria for each of these flammability classifications according to UL94 are, briefly, as follows. Multiple specimens (either 5 or 10) are tested per thickness. Some specimens are tested after conditioning for 48 hours at 23 °C, 50% relative humidity. The other specimens are tested after conditioning for 168 hours at 70 °C. The bar is mounted with the long axis vertical for flammability testing. The specimen is supported such that its lower end is 9.5 mm above the Bunsen burner tube. A blue 19 mm high flame is applied to the center of the lower edge of the specimen for 10 seconds. The time until the flaming of the bar ceases is recorded (T1). If burning ceases, the flame is re-applied for an additional 10 seconds. Again, the time until the flaming of the bar ceases is recorded (T2). If the specimen drips particles, these shall be allowed to fall onto a layer of untreated surgical cotton placed 305 mm below the specimen. V0: In a sample placed so that its long axis is 180 degrees to the flame, the maximum period of flaming and/or smoldering after removing the igniting flame does not exceed 10 seconds and none of the vertically placed samples produces drips of burning particles that ignite absorbent cotton, and no specimen burns up to the holding clamp after flame or after glow.

The data were also analyzed by calculating the average flame out time, standard deviation of the flame out time and the total number of drips, and by using statistical methods to convert that data to a prediction of the probability of first time pass, or "p(FTP)", that a particular sample formulation would achieve a "pass" rating in the conventional UL94 V0 or V1 testing of 5 bars. The probability of a first time pass on a first submission (pFTP) may be determined according to the formula:

$$p(FTP) = (P_{t1\ >mbt,\ n = 0}\ X\ P_{t2>mbt,\ n = 0}\ X\ P_{total<=mtbt}\ X\ P_{drip,\ n = 0})$$

where $P_{t1\ >mbt,\ n}$ = 0 is the probability that no first burn time exceeds a maximum burn time value, $P_{t2>mbt,\ n=0}$ is the probability that no second burn time exceeds a maximum burn time value, $P_{total<=mtbt}$ is the probability that the sum of the burn times is less than or equal to a maximum total burn time value, and $P_{drip,n=0}$ is the probability that no specimen exhibits dripping during the flame test. First and second burn time refer to burn times after a first and second application of the flame, respectively.

The probability that no first burn time exceeds a maximum burn time value, $P_{t1\ >mbt,\ n=0}$, may be determined the formula:

$$P_{t1\ >mbt,\ n = 0} = (1 - P_{t1\ >mbt})^5$$

where $P_{t1>mbt}$ is the area under the log normal distribution curve for t1 > mbt, and where the exponent "5" relates to the number of bars tested. The probability that no second burn time exceeds a maximum burn time value may be determined from the formula:

$$P_{t2\ >mbt,\ n = 0} = (1 - P_{t2\ >mbt})$$

where $P_{t2>mbt}$ is the area under the normal distribution curve for t2>mbt. As above, the mean and standard deviation of the burn time data set are used to calculate the normal distribution curve. For the UL-94 V0 rating, the maximum burn time is 10 seconds. For a V1 or V2 rating the maximum burn time is 30 seconds. The probability $P_{drip,\ n=0}$ that no specimen exhibits dripping during the flame test is an attribute function, estimated by:

$$P_{drip,\ n = 0} = (1 - P_{drip})^5$$

where $P_{drip}$ = (the number of bars that drip/the number of bars tested).

The probability $P_{total<=mtbt}$ that the sum of the burn times is less than or equal to a maximum total burn time value may be determined from a normal distribution curve of simulated 5-bar total burn times. The distribution may be generated from a Monte Carlo simulation of 1000 sets of five bars using the distribution for the burn time data determined above. Techniques for Monte Carlo simulation are well known in the art. A normal distribution curve for 5-bar total burn times may be generated using the mean and standard deviation of the simulated 1000 sets. Therefore, $P_{total<=mtbt}$ may be determined from the area under a log normal distribution curve of a set of 1000 Monte Carlo simulated 5-bar total burn time for total ≤ maximum total burn time. For the UL-94 V0 rating, the maximum total burn time is 50 seconds. For a VI or V2 rating, the maximum total burn time is 250 seconds.

Exemplary formulations were prepared as described in Table 2 using the materials described in Table 1, wherein

all amounts are given in wt%. Data for performance of the formulations in various tests are shown in Table 3. The PC2 component of Table 2 can include an amount of PC-PS 1 equal to about 10% by weight of the blended thermoplastic composition. It should be noted that generally, 5-15% by weight (based on the weight of the blended thermoplastic composition) of PC-PS 1 can be utilized in some embodiments of the invention. The data show that compositions comprising 15 wt% wollastonite, a polycarbonate-polysiloxane copolymer, and MBS had very distinct performance results depending upon the nature of the flame retardant, e.g. compare FR1 and FR2 individually vs. compositions comprising both FR1 and FR2. As can be seen from Sample #1 and #2 comprising, respectively, FR1 and FR2 at the same loading (6 wt%), FR1 was inferior in flexural modulus compared to FR2, whereas FR2 poorer flame retardance efficiency compared to FR1. As the loading of FR2 increased, e.g. compare Samples #2, #3, and #4, the MFR, modulus and thin wall flame retardance capability increased, but with a decrement in HDT and impact toughness properties. However, the combination of FR1 and FR2 provided a synergy, i.e. see Sample #5, with robust impact and tensile elongation being realized at a level about the same or greater than properties typically realized in similar formulations without a mineral, and at the same Sample #5 had good flow, heat resistance, high modulus, and robust flame retardance performance at V0/1.0 mm.

Table 2.

| Component | #1 (*) | #2 (*) | #3 (*) | #4 (*) | #5 |
|---|---|---|---|---|---|
| PC1 | 30.29 | 30.29 | 28.99 | 27.49 | 28.99 |
| PC2 | 45.5 | 45.5 | 43.8 | 42.3 | 43.8 |
| MBS | 2 | 2 | 2 | 2 | 2 |
| WOLL | 15 | 15 | 15 | 15 | 15 |
| TSAN | 0.5 | 0.5 | 0.5 | 0.5 | 0.5 |
| AO-1 | 0.08 | 0.08 | 0.08 | 0.08 | 0.08 |
| AO-2 | 0.08 | 0.08 | 0.08 | 0.08 | 0.08 |
| PETS | 0.5 | 0.5 | 0.5 | 0.5 | 0.5 |
| FR1 | 6 | | | | 6 |
| FR2 | | 6 | 9 | 12 | 3 |
| (*) Reference examples. | | | | | |

Table 3.

| | | #1 | #2 | #3 | #4 | #5 |
|---|---|---|---|---|---|---|
| MFR, 260C, 2.16Kg | g/10 min | 13.0 | 9.2 | 12.7 | 17.3 | 11.7 |
| Flexural Modulus | MPa | 3220 | 3640 | 3960 | 4830 | 3650 |
| HDT, 1.82MPa, 3.2 mm | °C | 100 | 97 | 90 | 84 | 93 |
| Notched impact strength, 23C | J/m | 868 | 770 | 406 | 71 | 849 |
| Ductility | % | 100 | 100 | 100 | 0 | 100 |
| Modulus of Elasticity | MPa | 2908 | 3324 | 3457 | 4211 | 3190 |
| Stress at Yield | MPa | 50 | 54 | 55 | 59 | 51 |
| Elongation at Break | % | 79 | 80 | 78 | 44 | 89 |
| V0/1.0mm, 23C, 48hr | pftp | 1.00 | 0.07 | 0.92 | 1.00 | 0.87 |
| | Avg t2, s | 2.9 | 9.1 | 3.8 | 2.0 | 3.1 |
| UL Comments | -- | no dripping | no dripping | no dripping | no dripping | no dripping |
| UL 94 V0 @ 1.0mm | -- | V0 | V1 | V0 | V0 | V0 |

Additional formulations were prepared and tested (see Table 4 for formulation information and Table 5 for data

obtained for formulations of Table 4). The PC2 component of Table 4 can include an amount of PC-PS 1 equal to about 10% by weight of the blended thermoplastic composition. The additional formulations utilized alternative impact modifiers. The data show in the presence of a combination of FR1 and FR2, similar results were obtained for other impact modifiers as obtained for MBS. For example, Sample #7 had Notched impact strength at room temperature above 900 J/m, while maintaining good performance results for other properties such as MFR, elongation at break, and modulus. The formulations tested (Samples #6-9) surprisingly even provided 100% ductility at 0 °C with robust flame retardance performance.

Table 4.

| Component | #6 | #7 | #8 | #9 |
|---|---|---|---|---|
| PC1 | 28.99 | 28.99 | 28.99 | 28.49 |
| PC2 | 43.8 | 43.8 | 43.8 | 43.3 |
| MBS | 2 | | | |
| POE | | 2 | | |
| SRIM | | | 2 | |
| ABS | | | | 3 |
| WOLL | 15 | 15 | 15 | 15 |
| TSAN | 0.5 | 0.5 | 0.5 | 0.5 |
| AO-1 | 0.08 | 0.08 | 0.08 | 0.08 |
| AO-2 | 0.08 | 0.08 | 0.08 | 0.08 |
| PETS | 0.5 | 0.5 | 0.5 | 0.5 |
| FR1 | 6 | 6 | 6 | 6 |
| FR2 | 3 | 3 | 3 | 3 |

Table 5.

| | | #6 | #7 | #8 | #9 |
|---|---|---|---|---|---|
| MFR, 260C, 2.16Kg | g/10 min | 11.7 | 12.7 | 11.2 | 12.8 |
| Flexural Modulus | MPa | 3650 | 3520 | 3890 | 3700 |
| HDT, 1.82MPa, 3.2mm | °C | 93 | 91 | 93 | 92 |
| Notched impact strength, 23C | J/m | 849 | 904 | 840 | 769 |
| Ductility | % | 100 | 100 | 100 | 100 |
| Notched impact strength, 0C | J/m | 259 | 303 | 320 | 353 |
| Ductility | % | 100 | 100 | 100 | 100 |
| Modulus of Elasticity | MPa | 3190 | 3068 | 3289 | 3313 |
| Stress at Yield | MPa | 51 | 50 | 50 | 49 |
| Elongation at Break | % | 89 | 106 | 87 | 89 |
| V0/1.0mm, 23C, 48hr | pftp | 0.87 | 0.99 | 1.00 | 0.97 |
| | Avg t2, s | 3.1 | 2.8 | 2.6 | 3.8 |
| UL Comments | -- | no dripping | no dripping | no dripping | no dripping |
| UL 94 V0 @ 1.0mm | -- | V0 | V0 | V0 | V0 |

The impact of including both polycarbonate-polysiloxane and an impact modifier on the performance of the formulations was assessed using the formulations described in Table 6, with the test data for these formulations shown in Table 7. The PC2 component of Table 6 can include an amount of PC-PS 1 equal to about 10% by weight of the

blended thermoplastic composition. The data show that a combination of a polycarbonate-polysiloxane and an impact modifier in these formulations provided optimal results of ultra-high ductility without loss of performance for other properties. The data in Table 8 further underscore the synergistic effect of FR1 and FR2 in providing robust ductility performance and flame retardance, while retaining a good performance balance for the other properties tested.

Table 6.

| Component | #10 | #11 | #12 | #13 | #14 |
|---|---|---|---|---|---|
| PC1 | 28.99 | 28.99 | 28.99 | 28.99 | 23.99 |
| PC2 | 43.8 | 43.8 | 43.8 | 43.8 | 38.8 |
| MBS | 2 | | 2 | | 2 |
| POE | | 2 | | 2 | |
| WOLL | 15 | 15 | | | 25 |
| TALC | | | 15 | 15 | |
| TSAN | 0.5 | 0.5 | 0.5 | 0.5 | 0.5 |
| AO-1 | 0.08 | 0.08 | 0.08 | 0.08 | 0.08 |
| AO-2 | 0.08 | 0.08 | 0.08 | 0.08 | 0.08 |
| PETS | 0.5 | 0.5 | 0.5 | 0.5 | 0.5 |
| FR1 | 6 | 6 | 6 | 6 | 6 |
| FR2 | 3 | 3 | 3 | 3 | 3 |

Table 7.

| | | #10 | #11 | #12 | #13 | #14 |
|---|---|---|---|---|---|---|
| MFR, 260C, 2.16Kg | g/10 min | 11.7 | 12.7 | 9.9 | 12.3 | 10.0 |
| Flexural Modulus | MPa | 3650 | 3520 | 3570 | 3420 | 4650 |
| HDT, 1.82MPa, 3.2 mm | °C | 93 | 91 | 98 | 98 | 90 |
| Notched impact strength, 23C | J/m | 849 | 904 | 630 | 585 | 546 |
| Ductility | % | 100 | 100 | 100 | 100 | 100 |
| Modulus of Elasticity | MPa | 3190 | 3068 | 3561 | 3512 | 3956 |
| Stress at Yield | MPa | 51 | 50 | 52 | 52 | 47 |
| Elongation at Break | % | 89 | 106 | 91 | 66 | 53 |
| V0/1.0mm, 23C, 48hr | pftp | 0.87 | 0.99 | 1.00 | 1.00 | 1.00 |
| | Avg t2, s | 3.1 | 2.8 | 1.2 | 1.2 | 2.7 |
| UL Comments | -- | no dripping | no dripping | no dripping | no dripping | no dripping |
| UL 94 V0 @ 1.0mm | -- | V0 | V0 | V0 | V0 | V0 |

The effect of different mineral fillers (i.e. wollastonite, talc, and mica at 15 wt%) was assessed in the formulations described in Table 8, with the test results for these formulations shown in Table 9. The data show robust performance for wollastonite and talc, whereas the results obtained with mica were not as good as wollastonite and talc.

Table 8.

| Component | #17 | #18 | #19 | #20 | #21 | #22 |
|---|---|---|---|---|---|---|
| PC1 | 28.99 | 28.99 | 28.99 | 28.99 | 28.99 | 28.99 |
| PC2 | 33.8 | 33.8 | 33.8 | 33.8 | 33.8 | 33.8 |

(continued)

| Component | #17 | #18 | #19 | #20 | #21 | #22 |
|---|---|---|---|---|---|---|
| PC-PS1 | 10 | 10 | 10 | 10 | 10 | 10 |
| MBS | 2 | | 2 | | 2 | |
| POE | | 2 | | 2 | | 2 |
| WOLL | 15 | 15 | | | | |
| TALC | | | 15 | 15 | | |
| MICA | | | | | 15 | 15 |
| FR1 | 6 | 6 | 6 | 6 | 6 | 6 |
| FR2 | 3 | 3 | 3 | 3 | 3 | 3 |

Table 9.

| Test | Units | #17 | #18 | #19 | #20 | #21 | #22 |
|---|---|---|---|---|---|---|---|
| MFR, 260C, 2.16Kg | g/10 min | 12 | 13 | 10 | 12 | 9 | 10 |
| Flexural Modulus | MPa | 3650 | 3520 | 3570 | 3420 | 4630 | 4310 |
| Flexural Stress @ Yield | MPa | 88 | 85 | 89 | 88 | 94 | 92 |
| HDT, 1.82MPa, 3.2 mm | °C | 93 | 91 | 98 | 98 | 101 | 102 |
| Notched impact strength, 23C | J/m | 849 | 904 | 630 | 585 | 102 | 117 |
| Ductility | % | 100 | 100 | 100 | 100 | 100 | 100 |
| Modulus of Elasticity | MPa | 3190 | 3068 | 3561 | 3512 | 4652 | 4562 |
| Stress at Yield | MPa | 51 | 50 | 52 | 52 | 54 | 53 |
| Elongation at Break | % | 89 | 106 | 91 | 66 | 3 | 3 |
| V0/1.0mm, 23C, 48hr | pftp | .87 | .99 | 1.00 | 1.00 | 1.00 | 1.00 |
| | Avg t2, s | 3.1 | 2.8 | 1.2 | 1.2 | 2.2 | 2.7 |
| UL Comments | -- | no dripping | no dripping | no dripping | no dripping | no dripping | no dripping |
| UL 94 V0 @ 1.0mm | -- | V0 | V0 | V0 | V0 | V0 | V0 |

The disclosed formulations described hereinabove provide ultra-high ductility in terms of notched Izod impact strength (≥ 500 J/m, robust tensile elongation performance (≥ 50%), high flexural modulus (≥ 3500 MPa), good flow (MFR ≥ 10 g/10 min at 260 °C under a 2.16 kg load), high HDT (≥ 90 °C), and outstanding thin wall flame retardance performance (V0 ≤ 1 mm wall thickness). The demonstrated characteristics of the disclosed formulations make them well-suited for using articles of manufacture in the electric and electronic markets. It will be apparent to those skilled in the art that various modifications and variations can be made in the present invention without departing from the scope or spirit of the invention. Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

The patentable scope of the invention is defined by the claims, and can include other examples that occur to

those skilled in the art. Such other examples are intended to be within the scope of the claims if they have structural elements that do not differ from the literal language of the claims.

## Claims

1. A blended thermoplastic composition comprising:

   a) from 60 wt% to 80 wt% of a polycarbonate component, the polycarbonate component comprising 5-15 wt % polycarbonate-polysiloxane copolymer based on total weight of the composition;
   b) from greater than 0 wt% to 5 wt% of an impact modifier component;
   c) from greater than 0 wt% to 25 wt% of a mineral filler component; and
   d) from 5 wt% to 15 wt% of a flame retardant component, comprising a first flame retardant and a second flame retardant, wherein the first flame retardant is selected from rescorcinol bis(diphenyl phosphate), resorcinol bis(dixylenyl phosphate), hydroquinone bis(diphenyl phosphate), bisphenol-A bis(diphenyl phosphate), 4.4'-biphenol bis(diphenyl phosphate), triphenyl phosphate, methylneopentyl phosphite, pentaerythritol diethyl diphosphite. methyl neopentyl phosphonate. phenyl neopentyl phosphate, pentaerythritol diphenyldiphosphate, dicyclopotyl hypodiphosphate, dineopentyl hypophosphite, phenylpyrocatechol phosphite, ethylpyrocatechol phosphate and dipyrocatechol hypodiphosphate and the second flame retardant is aromatic cyclic phosphazene compounds having a structure represented by the formula:

   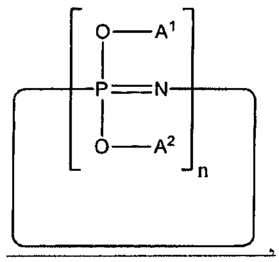

   wherein each of A1 and A2 is independently an aryl group having 6 to 10 carbon atoms optionally substituted with 1 to 4 alkyl groups having 1 to 4 carbon atoms: and wherein n is an integer of 3 to 6;

   wherein the combined weight percent value of all components does not exceed 100 wt%; and
   wherein all weight percent values are based on the total weight of the composition.

2. The composition of claim 1, wherein the blended thermoplastic composition has a melt flow rate (MFR) of greater than or equal to 10 g/10 min when tested in accordance with ASTM D1238 at 260 °C under a load of 2.16 kg.

3. The composition of any of claims 1-2, wherein the polycarbonate has a weight average molecular weight from 18,000 to 40,000 grams/mole, as measured by gel permeation chromatography using BPA polycarbonate standards.

4. The composition of any of claims 1-4, wherein the polycarbonate component comprises a first polycarbonate polymer component and a second polycarbonate polymer component.

5. The composition of claim 4, wherein the first polycarbonate polymer component has a melt flow rate (MFR) from 20 grams/10 minutes to 30 grams/10 minutes when measured at 300 °C and under a load of 1.2 kg according to ASTM D1238.

6. The composition of claim 4 or 5, wherein the first polycarbonate polymer component has a weight average molecular weight from 18,000 to 23,000 grams/mole, as measured by gel permeation chromatography using BPA polycarbonate standards.

7. The composition of any of claims 4-6, wherein the second polycarbonate polymer component has a melt flow rate (MFR) from 4.0 grams/10 minutes to 10.0 grams/10 minutes when measured at 300 °C and under a load of 1.2 kg according to ASTM D1238.

**8.** The composition of any of claims 4-7, wherein the second polycarbonate polymer component has a weight average molecular weight from 25,000 to 30,000 grams/mole, as measured by gel permeation chromatography using BPA polycarbonate standards.

**9.** The composition of any of claims 4-8, wherein the first polycarbonate component is present in an amount from 25 wt% to 40 wt%; and wherein the second polycarbonate component is present in an amount from 25 wt% to 40 wt%.

**10.** The composition of any of claims 1, wherein the impact modifier component comprises at least one acrylonitrile-butadiene-styrene (ABS) polymer component, at least one polyolefin elastomer (POE) polymer component, at least one silicone rubber impact modifier (SRIM) polymer component, or at least one methyl methacrylate-butadiene-styrene (MBS) polymer component, or combinations thereof.

**11.** The composition of any claims 1-10, wherein the mineral filler component is selected from a fibrous filler, a platy filler, or combinations thereof.

**12.** The composition of anyone of claims 1-11, capable of achieving a UL94 V0 rating at a thickness of 1.0 to 1.2 mm.

**13.** The composition of any claims 1-12, wherein a molded sample comprising the blended thermoplastic composition has a heat deflection temperature (HDT) greater than or equal to 90 °C when tested in accordance with ASTM D648 on a 3.2 mm thickness bar at 1.82 MPa.

**14.** The composition of any of claims 1-13, wherein the blended thermoplastic composition comprises:

a) from 60 wt% to 80 wt% of the polycarbonate component;
b) from 1 wt% to 4 wt% of the impact modifier component;
c) from 10 wt% to 20 wt% of the mineral filler component; and
d) from 5 wt% to 10 wt% of the flame retardant component;

wherein the combined weight percent value of all components does not exceed 100 wt%; and wherein all weight percent values are based on the total weight of the composition.
wherein the combined weight percent value of all components does not exceed 100 wt%; and wherein all weight percent values are based on the total weight of the composition.

**15.** An article comprising the composition of any of claims 1-14.

**Patentansprüche**

**1.** Eine gemischte thermoplastische Zusammensetzung, die Folgendes umfasst:

a) von 60 Gewichts% bis 80 Gewichts% einer Polycarbonatkomponente, wobei die Polycarbonatkomponente 5-15 Gewichts% Polycarbonat-Polysiloxan-Copolymer basierend auf dem Gesamtgewicht der Zusammensetzung umfasst;
b) von mehr als 0 Gewichts% bis 5 Gewichts% einer Schlagfestmodifikatorkomponente;
c) von mehr als 0 Gewichts% bis 25 Gewichts% einer Mineralfüllstoffkomponente; und
d) von 5 Gewichts% bis 15 Gewichts% einer Flammschutzmittelkomponente, umfassend ein erstes Flammschutzmittel und ein zweites Flammschutzmittel, worin das erste Flammschutzmittel gewählt ist aus Resorcinol bis(Diphenylphosphat), Resorcinol bis(Dixylenylphosphat), Hydrochinon bis(Diphenylphosphat), Bisphenol-A bis(Diphenylphosphat), 4,4'-Biphenol bis(Diphenylphosphat), Triphenylphosphat, Methylneopentylphosphit, Pentaerythritoldiethyldiphosphit, Methylneopentylphosphonat, Phenylneopentylphosphat, Pentaerythritoldiphenyldiphosphat, Dicyclopentylhypodiphosphat, Dineopentylhypophosphit, Phenylpyrocatecholphosphit, Ethylpyrocatecholphosphat und Dipyrocatecholhypodiphosphat, und das zweite Flammschutzmittel ist aromatische zyklische Phosphazenverbindungen mit einer Struktur dargestellt durch die Formel:

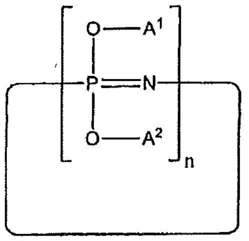

worin jedes von A1 und A2 unabhängig eine Arylgruppe mit 6 bis 10 Kohlenstoffatomen ist, wahlweise substituiert mit 1 bis 4 Alkylgruppen mit 1 bis 4 Kohlenstoffatomen;
und worin n eine ganze Zahl von 3 bis 6 ist;
worin der zusammengefasste Gewichtsprozentwert von allen Komponenten 100 Gewichts% nicht überschreitet; und
worin alle Gewichtsprozentwerte auf dem Gesamtgewicht der Zusammensetzung basieren.

**2.** Die Zusammensetzung gemäß Anspruch 1, worin die gemischte thermoplastische Zusammensetzung eine Schmelzflußrate (MFR) von größer als oder gleich 10 g/10 Min. hat, wenn getestet gemäß ASTM D1238 bei 260°C unter einer Last von 2,16 kg.

**3.** Die Zusammensetzung gemäß irgendeinem der Ansprüche 1-2, worin das Polycarbonat ein Gewichtsmittel Molekulargewicht von 18,000 bis 40,000 Gramm/Mol hat, wie gemessen durch Gelpermeationschromatographie unter Verwendung von BPA Polycarbonatstandards.

**4.** Die Zusammensetzung gemäß irgendeinem der Ansprüche 1-3, worin die Polycarbonatkomponente eine erste Polycarbonat-Polymerkomponente und eine zweite Polycarbonat-Polymerkomponente umfasst.

**5.** Die Zusammensetzung gemäß Anspruch 4, worin die erste Polycarbonat-Polymerkomponente eine Schmelzflußrate (MFR) von 20 Gramm/10 Minuten bis 30 Gramm/10 Minuten hat, wenn gemessen bei 300°C und unter einer Last von 1,2 kg gemäß ASTM D1238.

**6.** Die Zusammensetzung gemäß Anspruch 4 oder 5, worin die erste Polycarbonat-Polymerkomponente ein Gewichtsmittel Molekulargewicht von 18,000 bis 23,000 Gramm/Mol hat, wie gemessen durch Gelpermeationschromatographie unter Verwendung von BPA Polycarbonatstandards.

**7.** Die Zusammensetzung gemäß irgendeinem der Ansprüche 4 bis 6, worin die zweite Polycarbonat-Polymerkomponente eine Schmelzflußrate (MFR) von 4,0 Gramm/10 Minuten bis 10,0 Gramm/10 Minuten hat, wenn gemessen bei 300°C und unter einer Last von 1,2 kg gemäß ASTM D1238.

**8.** Die Zusammensetzung gemäß irgendeinem der Ansprüche 4-7, worin die zweite Polycarbonat-Polymerkomponente ein Gewichtsmittel Molekulargewicht von 25,000 bis 30,000 Gramm/Mol hat, wie gemessen durch Gelpermeationschromatographie unter Verwendung von BPA Polycarbonatstandards.

**9.** Die Zusammensetzung gemäß irgendeinem der Ansprüche 4-8, worin die erste Polycarbonatkomponente in einer Menge von 25 Gewichts% bis 40 Gewichts% vorhanden ist; und worin die zweite Polycarbonatkomponente in einer Menge von 25 Gewichts% bis 40 Gewichts% vorhanden ist.

**10.** Die Zusammensetzung gemäß irgendeinem der Ansprüche 1-9, worin die Schlagfestmodifikatorkomponente mindestens eine Acrylonitril-Butadien-Styren (ABS) Polymerkomponente, mindestens eine Polyolefinelastomer (POE) Polymerkomponente, mindestens eine Silikongummischlagfestmodifikator (SRIM) Polymerkomponente, oder mindestens eine Methylmethacrylat-Butadien-Styren (MBS) Polymerkomponente, oder Kombinationen daraus umfasst.

**11.** Die Zusammensetzung gemäß irgendeinem der Ansprüche 1 bis 10, worin die Mineralfüllstoffkomponente gewählt ist aus faserförmigem Füllstoff, einem plättchenförmigen Füllstoff, oder Kombinationen daraus.

**12.** Die Zusammensetzung gemäß irgendeinem der Ansprüche 1 bis 11, imstande eine UL94 V0 Bewertung bei einer Dicke von 1,0 bis 1,2 mm zu erzielen.

**13.** Die Zusammensetzung gemäß irgendeinem der Ansprüche 1 bis 12, worin eine geformte Probe umfassend die gemischte thermoplastische Zusammensetzung eine Wärmeformbeständigkeitstemperatur (HDT) von größer als oder gleich 90°C hat, wenn getestet in Übereinstimmung mit ASTM D648 auf einem 3,2 mm dicken Stab bei 1,82 Mpa.

**14.** Die Zusammensetzung gemäß irgendeinem der Ansprüche 1 bis 13, worin die gemischte thermoplastische Zusammensetzung Folgendes umfasst:

a) von 60 Gewichts% bis 80 Gewichts% der Polycarbonatkomponente;
b) von 1 Gewichts% bis 4 Gewichts% der Schlagfestmodifikatorkomponente;
c) von 10 Gewichts% bis 20 Gewichts% der Mineralfüllstoffkomponente; und
d) von 5 Gewichts% bis 10 Gewichts% der Flammschutzmittelkomponente;

worin der zusammengefasste Gewichtsprozentwert von allen Komponenten 100 Gewichts% nicht überschreitet; und worin alle Gewichtsprozentwerte auf dem Gesamtgewicht der Zusammensetzung basieren.

**15.** Ein Artikel umfassend die Zusammensetzung gemäß irgendeinem der Ansprüche 1-14.

**Revendications**

**1.** Composition thermoplastique mélangée comprenant :

a) de 60 % en poids à 80 % en poids d'un composant polycarbonate, le composant polycarbonate comprenant de 5 à 15 % en poids d'un copolymère de polycarbonate-polysiloxane en se basant sur le poids de la composition ;
b) plus de 0 % en poids à 5 % en poids d'un composant modificateur d'impact ;
c) plus de 0 % en poids à 25 % en poids d'un composant charge minérale ; et
d) de 5 % en poids à 15 % en poids d'un composant ignifuge, comprenant un premier ignifuge et un second ignifuge, le premier ignifuge étant choisi parmi le bis(phosphate de diphényle) de résorcinol, le bis(phosphate de dixylényle) de résorcinol, le bis(phosphate de diphényle) d'hydroquinone, le bis(phosphate de diphényle) de bisphénol A, le bis(phosphate de diphényle) de 4,4'-biphénol, le phosphate de triphényle, le phosphite de méthylnéopentyle, le diphosphite de pentaérythritoldiéthyle, le phosphonate de méthylnéopentyle, le phosphate de phénylnéopentyle, de phosphate de diphényle de pentaérythritol, l'hypodiphosphate de dicyclopentyle, l'hypophosphite de dinéopentyle, le phosphite de phénylpyrocatéchol, le phosphate d'éthylpyrocatéchol et l'hypodiphosphate de dipyrocatéchol et le second ignifuge étant un composé phosphazène cyclique aromatique ayant une structure représentée par la formule :

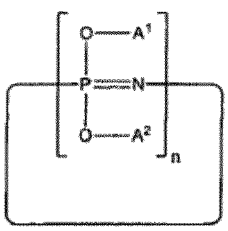

dans laquelle chacun de A1 et A2 est indépendamment un groupe aryle ayant de 6 à 10 atomes de carbone éventuellement substitué par 1 à 4 groupes alkyle ayant de 1 à 4 atomes de carbone ; et dans laquelle n est un nombre entier de 3 à 6 ;

dans laquelle la valeur en pourcentage en poids combinée de tous les composants n'excède pas 100 % en poids ; et dans laquelle toutes les valeurs en pourcentage en poids sont basées sur le poids total de la composition.

**2.** Composition selon la revendication 1, dans laquelle la composition thermoplastique mélangée a un indice de fusion (MFR) supérieur ou égal à 10 g/10 min lorsqu'elle est testée conformément à la norme ASTM D1238 à 260 °C sous une charge de 2,16 kg.

**3.** Composition selon l'une quelconque des revendications 1 à 2, dans laquelle le polycarbonate a un poids moléculaire moyen en poids de 18 000 à 40 000 grammes/mole, comme mesuré par chromatographie par perméation de gel

en utilisant des étalons de polycarbonate de BPA.

**4.** Composition selon l'une quelconque des revendications 1 à 3, dans laquelle le composant polycarbonate comprend un premier composant polymère de polycarbonate et un second composant polymère de polycarbonate.

**5.** Composition selon la revendication 4, dans laquelle le premier composant polymère de polycarbonate a un indice de fusion (MFR) de 20 grammes/10 minutes à 30 grammes/10 minutes lorsqu'il est mesuré à 300 °C et sous une charge de 1,2 kg conformément à la norme ASTM D1238.

**6.** Composition selon la revendication 4 ou 5, dans laquelle le premier composant polymère de polycarbonate a un poids moléculaire moyen en poids de 18 000 à 23 000 grammes/mole, comme mesuré par chromatographie par perméation de gel en utilisant des étalons de polycarbonate de BPA.

**7.** Composition selon l'une quelconque des revendications 4 à 6, dans laquelle le second composant polymère de polycarbonate un indice de fusion (MFR) de 4,0 grammes/10 minutes à 10,0 grammes/10 minutes lorsqu'il est mesuré à 300 °C et sous une charge de 1,2 kg conformément à la norme ASTM D1238.

**8.** Composition selon l'une quelconque des revendications 4 à 7, dans laquelle le second composant polymère de polycarbonate un poids moléculaire moyen en poids de 25 000 à 30 000 grammes/mole, comme mesuré par chromatographie par perméation de gel en utilisant des étalons de polycarbonate de BPA.

**9.** Composition selon l'une quelconque des revendications 4 à 8, dans laquelle le premier composant polymère de polycarbonate est présent en une quantité de 25 % en poids à 40 % en poids ; et dans laquelle le second composant polymère de polycarbonate est présent en une quantité de 25 % en poids à 40 % en poids.

**10.** Composition selon l'une quelconque des revendications 1 à 9, dans laquelle le composant modificateur d'impact comprend au moins un composant polymère d'acrylonitrile-butadiène-styrène (ABS), au moins un composant polymère d'élastomère polyoléfinique (POE), au moins un composant polymère modificateur d'impact en caoutchouc de silicone (SRIM) ou au moins un composant polymère de méthacrylate de méthyle-butadiène-styrène (MBS), ou des combinaisons de ceux-ci.

**11.** Composition selon l'une quelconque des revendications 1 à 10, dans laquelle le composant charge minérale est choisi parmi une charge fibreuse, une charge lamellaire, ou des combinaisons de celles-ci.

**12.** Composition selon l'une quelconque des revendications 1 à 11, capable d'atteindre le score UL94 V0 à une épaisseur de 1,0 à 1,2 mm.

**13.** Composition selon l'une quelconque des revendications 1 à 12, dans laquelle un échantillon moulé comprenant la composition thermoplastique mélangée une température de déformation à chaud (HDT) supérieure ou égale à 90 °C lorsqu'il est testé conformément à la norme ASTM D648 sur une barre de 3,2 mm d'épaisseur à 1,82 MPa.

**14.** Composition selon l'une quelconque des revendications 1 à 13, dans laquelle la composition thermoplastique mélangée comprend :

a) de 60 % en poids à 80 % en poids du composant polycarbonate ;
b) de 1 % en poids à 4 % en poids du composant modificateur d'impact ;
c) de 10 % en poids à 20 % en poids du composant charge minérale ; et
d) de 5 % en poids à 10 % en poids du composant ignifuge ;

dans laquelle la valeur en pourcentage en poids combinée de tous les composants n'excède pas 100 % en poids ; et dans laquelle toutes les valeurs en pourcentage en poids sont basées sur le poids total de la composition.

**15.** Article comprenant la composition selon l'une quelconque des revendications 1 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110028615 A
- US 7786246 B
- US 20140107266 A
- US 20140179817 A